# FASCICULE DE BREVET EUROPEEN

(11) **EP 3 947 126 B1**
(45) Date de publication et mention de la délivrance du brevet: **30.08.2023**
(21) Numéro de dépôt: 20711995.9
(22) Date de dépôt: 24.03.2020
(51) Int. Cl.: B62K 3/00, B62K 15/00, B62M 11/02, B62K 25/00, B62K 21/02

(54) **TROTTINETTE MOTORISÉE AVEC TRANSMISSION PAR SYSTÈME À ENGRENAGE**
MOTORISIERTER ROLLER MIT ZAHNRADSYSTEMGETRIEBE
MOTORISED SCOOTER WITH GEAR SYSTEM TRANSMISSION

(30) Priorité: 28.03.2019 FR 1903266
(43) Date de publication de la demande: 09.02.2022
(73) Titulaire: Alligator International Design SL, 08021 Barcelona (ES)
(72) Inventeur: VANEY, Laurent Julien Michel, 08021 BARCELONE (ES); BATLLE BESORA, Genis, 08021 BARCELONE (ES)
(74) Mandataire: Germain Maureau
(86) Numéro de dépôt international: PCT/EP2020/058235
(87) Numéro de publication internationale: WO 2020/193585

(56) Documents cités:
- EP-A2- 0 836 985
- WO-A1-2011/054178
- CN-U- 205 469 530
- CN-Y- 2 446 036
- DE-U1- 29 612 276
- JP-A- S6 092 929
- US-B1- 6 345 678

## Description

### [DOMAINE DE L'INVENTION]

L'invention se rapporte à une trottinette, et plus spécifiquement à une trottinette motorisée comprenant un châssis muni d'un marchepied et supportant une roue arrière, une colonne de direction équipée d'une roue avant et montée pivotante sur le châssis, et un moteur accouplé à la roue arrière pour l'entraîner en rotation.

L'invention trouve une application favorite, et non limitative, pour une trottinette électrique, c'est-à-dire une trottinette motorisée avec un moteur électrique.

### [ETAT DE L'ART]

Dans une première réalisation connue, le moteur est directement intégré à l'intérieur de la roue arrière, dans son moyeu. Dans cette première réalisation, la taille spécifique de la roue arrière et le couple nécessaire obligent, en l'absence d'un réducteur de couple nécessairement encombrant, à intégrer soit un moteur de grande taille et donc trop lourd pour les roues les plus grandes, soit des roues trop petites, instables et dures.

Par ailleurs, le fait d'intégrer le moteur dans la roue rend indispensable l'utilisation d'une jante solide avec des montages complexes pour en garantir l'étanchéité, et d'une fourche arrière complexe à démonter pour supporter la roue motrice, contribue à augmenter le poids et l'inertie de la roue motrice, et accroît la difficulté lors des réparations (en particulier lors d'un changement de roue ou d'un changement de chambre à air ou de pneumatique) et l'accès à différents points de la roue et du moteur.

Dans une seconde réalisation connue, le moteur est équipé d'un arbre moteur qui entraîne en rotation la roue arrière via une transmission à chaîne ou à courroie. La chaîne ou la courroie est ainsi directement connectée à la roue arrière et laissée à l'air libre.

Cependant, la taille spécifique de la roue arrière permet rarement un rapport de transmission optimal. Par ailleurs, dans le cas spécifique d'une trottinette, la proximité du sol et la difficulté de protéger la chaîne ou la courroie des agressions extérieures fragilisent ce type de transmission et rend sa maintenance délicate.

L'état de la technique peut également être illustré par l'enseignement du document JP S60 92929 A qui divulgue une motocyclette comprenant un châssis muni d'un marchepied et supportant une selle pour une assise du conducteur, et un moteur porté par le châssis et équipé d'un carter moteur et d'un arbre moteur, où cet arbre moteur est accouplé à un arbre transversal arrière portant la roue arrière via un système à engrenage. Ce système à engrenage comprend un pignon denté couplé via un réducteur à l'arbre moteur, et une couronne dentée montée sur l'arbre transversal arrière. Cependant, dans cette motocyclette, il est prévu de monter partiellement l'arbre transversal arrière, ainsi que la couronne dentée et le pignon denté, à l'intérieur d'un boîtier clos qui est fixé à la fois sur un carter moteur, sur un moyeu de la roue arrière et également fixé sur le châssis via un organe de suspension. Une telle structure formée de ce boîtier est cependant inadaptée pour une trottinette, en particulier du fait de l'organe de suspension, et présente également des inconvénients d'un point de mécanique (soutien mécanique limité pour l'arbre transversal arrière et pour le système à engrenage) et d'un point de vue accessibilité (accès compliqué à la roue arrière, en particulier pour une réparation ou un changement de pneumatique).

Il est également connu du document US6345678B1 d'employer un système à engrenage pris dans un boîtier, avec pignon et couronne dentée pour entraîner une roue arrière d'une trottinette, via un arbre transversal arrière qui est supporté par deux barres de support disposées de part et d'autre de la roue arrière. Une telle solution est cependant inadaptée pour faciliter les opérations de maintenance sur la roue arrière et sur le moteur, car il faut démonter le boîtier et l'arbre transversal arrière pour pouvoir démonter la roue arrière. Ledit document US6345678B1 divulgue une trottinette selon le préambule de la revendication 1.

### [DESCRIPTION GENERALE DE L'INVENTION]

La présente invention vise à résoudre en tout ou partie les inconvénients précités, en proposant une trottinette motorisée munie d'un système de transmission qui contribue à une réduction du poids et de l'encombrement.

Un autre but de l'invention est de faciliter les opérations de maintenance sur la roue arrière et sur le moteur, notamment un changement de roue ou une réparation d'une chambre à air dans la roue arrière.

Un autre but de l'invention est de réduire l'encombrement autour de la roue arrière, et en particulier l'encombrement latéral sur un côté droit ou gauche de la roue arrière.

Un autre but de l'invention est d'adapter les conditions de vitesse et de couple qu'apporte le moteur en une seule étape de démultiplication.

A cette fin, l'invention propose une trottinette comprenant un châssis muni d'un marchepied et supportant une roue arrière, une colonne de direction équipée d'une roue avant et montée pivotante sur ce châssis, et un moteur équipé d'un arbre moteur entraîné en rotation selon un axe moteur et accouplé à la roue arrière pour l'entraîner en rotation selon un axe transversal par l'intermédiaire d'un système de transmission, la trottinette présentant un plan médian orthogonal à l'axe transversal et délimitant un premier côté latéral et un second côté latéral opposés, et la roue arrière présentant une première face latérale sur le premier côté latéral et une seconde face latérale, opposée à la première face latérale, sur le second côté latéral, cette trottinette étant remarquable en ce que le système de transmission comprend :
- un arbre transversal arrière s'étendant selon l'axe transversal, non parallèle à l'axe moteur, et présentant deux portions d'extrémité opposées, respectivement une première portion d'extrémité et une seconde portion d'extrémité, la roue arrière étant accouplée en rotation sur la seconde portion d'extrémité de l'arbre transversal arrière ;
- un système à engrenage comprenant une couronne dentée en engrènement avec un pignon denté, ladite couronne dentée étant accouplée en rotation sur la première portion d'extrémité de l'arbre transversal arrière, et ledit pignon denté étant accouplé en rotation à l'arbre moteur, de sorte qu'une rotation de l'arbre moteur est convertible par ledit système à engrenage en une rotation de l'arbre transversal arrière et de la roue arrière autour de l'axe transversal ; et
- une structure arrière fixée au châssis et supportant au moins le pignon denté et la première portion d'extrémité de l'arbre transversal arrière, ladite structure arrière s'étendant latéralement sur le second côté latéral vis-à-vis du plan médian, en regard de la second face latérale de la roue arrière, de sorte que la seconde portion d'extrémité de l'arbre transversal arrière dépasse de la structure arrière pour supporter en porte-à-faux la roue arrière.

Ainsi, l'invention propose d'utiliser un système à engrenage permettant d'adapter les conditions de vitesse et de couple qu'apporte le moteur en une seule étape de démultiplication, et donc permettant aussi de se passer de composants dont l'entretien est élevé comme les chaînes et les courroies.

Par ailleurs, l'invention permet de libérer totalement la première face latérale de la roue arrière, opposée à la seconde face latérale et à la structure arrière, ce qui autorise un accès libre à la roue arrière sur le premier côté latéral (droit ou gauche), notamment pour l'extraire de manière facile et rapide afin de faciliter les tâches de maintenance et de réparation dans un environnement quotidien.

Un tel système à engrenage permet également d'avoir un rapport de transmission du couple pouvant aller jusqu'à 1:5, ce qui est particulièrement avantageux pour une trottinette, offrant au final une transmission légère et simple, adéquate à ce type de véhicule.

Le montage en porte-à-faux de la roue arrière permet une utilisation d'une roue arrière de qualité, facilement démontable, avec éventuellement un pneumatique et une chambre à air qui donne à la trottinette une commodité et une sécurité requises en circulation.

Au sens de l'invention, un côté latéral est à apprécier par rapport au plan médian de la trottinette qui est orthogonal à l'axe transversal et qui inclut un axe longitudinal de la trottinette ; un tel axe longitudinal passant par la roue avant et par la roue arrière et étant parallèle à une direction d'avancée de la trottinette lorsque celle-ci avance en ligne droite. Ce plan médian inclut également un axe vertical en considérant que la trottinette est en appui sur un sol horizontal.

Ainsi, le premier côté latéral correspond à un côté droit (ou inversement un côté gauche) tandis que le second côté latéral correspond à un côté gauche (ou inversement un côté droit). Une disposition sur le côté droit d'un élément (comme la roue arrière) correspond à une disposition à la droite du plan médian en regard d'une face latérale droite (ou d'un flanc droit) de l'élément, et une disposition sur le côté gauche d'un élément correspond à une disposition à la gauche du plan médian en regard d'une face latérale gauche (ou d'un flanc gauche) de l'élément.

Ces dispositions relatives sur les côtés latéraux droit ou gauche sont à distinguer d'une disposition sur le dessus qui correspond à une élévation verticale (et donc à un éloignement par rapport au sol), une disposition sur le dessous qui correspond à un abaissement vertical (et donc à un rapprochement par rapport au sol), une disposition sur le devant (ou l'avant) qui correspond à une position relative le long de l'axe longitudinal dans le sens d'un rapprochement vis-à-vis de la roue avant, et une disposition sur le derrière (ou l'arrière) qui correspond à une position relative le long de l'axe longitudinal dans le sens d'un rapprochement vis-à-vis de la roue arrière.

Par ailleurs, et selon l'invention, la structure arrière comprend deux flasques, respectivement un flasque interne et un flasque externe, s'étendant en vis-à-vis et écartés l'un de l'autre, le flasque interne s'étendant au moins en partie en regard de la second face latérale de la roue arrière, ces flasques encadrant le pignon denté et la couronne dentée, et dans laquelle la première portion d'extrémité de l'arbre transversal arrière traverse des orifices arrière ménagés en vis-à-vis dans les flasques respectifs.

Ainsi, l'arbre transversal arrière est porté par ces deux flasques qui protègent et soutiennent le système de transmission et en particulier son système à engrenage.

Une telle structure arrière avec ces deux flasques présentent les avantages d'être compacte, et donc adaptée pour une trottinette qui a son moteur proche du sol, tout en procurant un soutien de l'arbre transversal arrière qui soit efficace pour un support en porte-à-faux de la roue arrière

Selon une possibilité, les orifices arrière des flasques supportent des paliers de roulement dans lesquels est montée rotative la première portion d'extrémité de l'arbre transversal arrière.

De tels paliers de roulement peuvent par exemple être du type roulement à billes, roulement à aiguilles, galet de roulement, galet cylindrique, palier lisse ou palier glissant.

Selon une autre possibilité, la structure arrière comprend un plateau muni d'un orifice avant traversé par un arbre de pignon solidaire du pignon denté.

Ainsi, le pignon denté et l'arbre de pignon sont portés par la structure arrière, et en particulier par ce plateau.

Avantageusement, l'orifice avant du plateau supporte au moins un palier de roulement dans lequel est monté rotatif l'arbre de pignon.

Ce palier de roulement peut par exemple être du type roulement à billes, roulement à aiguilles, galet de roulement, galet cylindrique, palier lisse ou palier glissant.

Dans une réalisation particulière, le plateau s'étend entre les deux flasques.

Ainsi, la structure arrière présente une structure en « H » avec les deux flasques en regard et le plateau joignant les deux flasques entre eux et portant l'arbre de pignon.

Dans un mode de réalisation particulier, le pignon denté est accouplé à l'arbre moteur via un accouplement à élastomère, un joint homocinétique, un joint de transmission ou un joint universel, ou en variante via un système à engrenage préliminaire.

Un tel accouplement à élastomère forme un accouplement qui est à la fois rigide en torsion pour transmettre un couple en rotation entre l'arbre moteur et le pignon denté, tout en permettant un rattrapage des défauts d'alignement angulaire, axial et parallèle entre l'axe moteur et l'axe du pignon.

Les joints précités permettent également une transmission d'un couple en rotation et un rattrapage de désalignement entre l'axe moteur et l'axe du pignon. Le système à engrenage préliminaire permet aussi de remplir une fonction de transmission d'un couple.

Il est à noter que l'accouplement à élastomère permet en outre d'accoupler et de désaccoupler le moteur simplement, en séparant l'arbre moteur du pignon denté auquel il est fixé au moyen de l'accouplement à élastomère.

Selon une possibilité, l'axe moteur est orthogonal à l'axe transversal ou est incliné relativement à l'axe transversal selon un angle compris entre 45 et 90 degrés.

Selon une autre possibilité, l'axe moteur est parallèle à un axe longitudinal de la trottinette, un tel axe longitudinal étant inclus dans le plan médian et passant par la roue avant et par la roue arrière en étant parallèle à une direction d'avancée de la trottinette lorsque celle-ci avance en ligne droite, ou est incliné relativement à l'axe longitudinal selon un angle compris entre 0 et 45 degrés.

Dans une réalisation avantageuse, la roue arrière est pourvue d'un moyeu qui est accouplé en rotation sur la seconde portion d'extrémité de l'arbre transversal arrière, par exemple au moyen d'au moins une clavette, d'un accouplement à bride, d'un accouplement à goupille, d'un accouplement à étrier ou d'un accouplement à bague.

Selon une autre possibilité, le système à engrenage forme un engrenage conique à denture hélicoïdale ou droite.

Selon une caractéristique, le système à engrenage présente un rapport de transmission entre l'arbre moteur en entrée et l'arbre transversal arrière en sortie qui est compris entre 1:2 et 1:5.

Selon une autre caractéristique, la structure arrière est fixée sur une platine solidaire du châssis, ladite platine supportant le moteur et présentant deux faces opposées, respectivement une face avant de laquelle fait saillie le moteur et une face arrière de laquelle fait saillie la structure arrière.

Dans un mode de réalisation particulier, le moteur s'étend à l'arrière du marchepied et partiellement en-dessous du marchepied, du côté droit ou gauche.

Selon une possibilité, le marchepied présente un gradin arrière, en surélévation, pour une disposition du moteur partiellement en-dessous de ce gradin arrière

L'invention se rapporte également à la caractéristique selon laquelle la trottinette est pliable avec son châssis comprenant, d'une part, une première partie supportant la roue arrière et le marchepied et, d'autre part, une seconde partie supportant en pivot la colonne de direction, dans laquelle la première partie et la second partie du châssis sont reliées l'une à l'autre par une articulation pivotante selon un axe de pliage permettant une mobilité de l'une par rapport à l'autre entre :
- une configuration dépliée dans laquelle la colonne de direction saille vers le haut vis-à-vis du marchepied pour un usage lors d'un déplacement, ladite colonne de direction s'étendant dans le plan médian ; et
- une configuration repliée dans laquelle la colonne de direction est rabattue sur le premier côté latéral vis-à-vis du plan médian et s'étend à distance dudit plan médian, au moins partiellement en-dessous du marchepied, le long d'un premier rebord latéral du marchepied situé sur ledit premier côté latéral et en regard de la première face latérale de la roue arrière.

Ainsi, la première face latérale de la roue arrière étant dégagée grâce au montage en porte-à-faux de la roue arrière, il est avantageux d'amener la colonne de direction, lors du repliage, au plus près de cette première face latérale, ce qui procure un encombrement latéral réduit.

### [BREVE DESCRIPTION DES DESSINS]

D'autres caractéristiques et avantages de la présente invention apparaîtront à la lecture de la description détaillée ci-après, d'un exemple de mise en oeuvre non limitatif, faite en référence aux figures annexées dans lesquelles :
[Fig.1] est une vue schématique en perspective avant d'une trottinette 1, selon un mode de réalisation de l'invention, en configuration dépliée ;
[Fig.2] est une vue schématique de côté, en l'occurrence du côté droit, de la trottinette de la figure 1 (non intégralement représentée) ;
[Fig.3] est une vue schématique en perspective arrière de la trottinette des figures 1 et 2 (non intégralement représentée) ;
[Fig.4] est une vue schématique une vue schématique de face de la trottinette des figures 1 à 3 (non intégralement représentée) ;
[Fig.5] est une vue schématique en perspective avant de la trottinette des figures 1 à 4, en configuration repliée ;
[Fig.6] est une vue schématique de dessous de la trottinette des figures 1 à 5, en configuration repliée ;
[Fig.7] est une vue schématique en perspective du côté droit de l'arrière de la trottinette des figures 1 à 6, sans marchepied ni carter arrière pour visualiser le système à transmission et son système à engrenage ;
[Fig.8] est une vue schématique en perspective du côté gauche de l'arrière de la trottinette des figures 1 à 6, sans marchepied ni carter arrière ; et
[Fig.9] est une vue schématique en coupe de l'arrière de la trottinette des figures 1 à 6 selon un plan de coupe horizontal contenant l'axe moteur et l'axe transversal.

### [DESCRIPTION DETAILLEE]

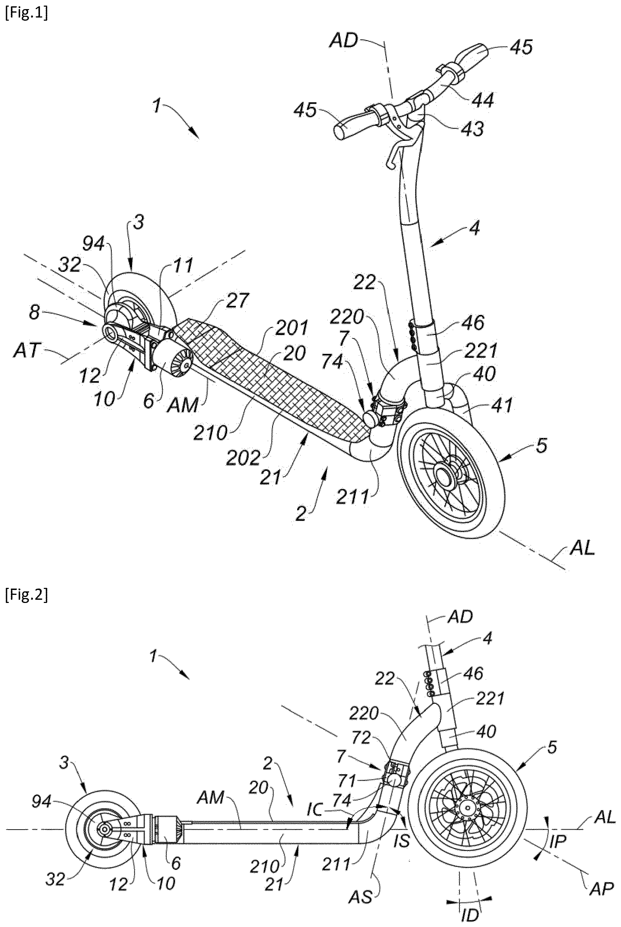

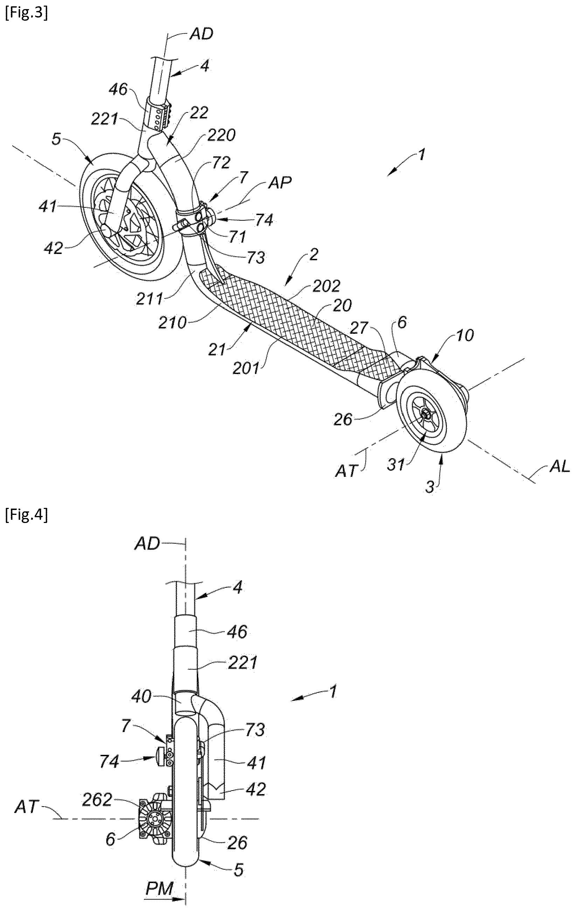

En référence aux figures 1 à 6, une trottinette 1, selon un mode de réalisation de l'invention, forme une trottinette motorisée et plus spécifiquement une trottinette électrique ou trottinette à motorisation électrique. La trottinette 1 est une trottinette à deux roues, comprenant :
- un châssis 2 muni d'un marchepied 20 et supportant une roue arrière 3 rotative selon un axe transversal AT,
- une colonne de direction 4 équipée d'une roue avant 5, cette colonne de direction 4 étant montée pivotante sur le châssis 2 ; et
- un moteur 6 accouplé à la roue arrière 3 via un système de transmission 8 pour l'entraîner en rotation selon l'axe transversal AT, la roue arrière 3 formant ainsi la roue motrice propre à propulser la trottinette 1.

La trottinette 1 présente un plan médian PM orthogonal à l'axe transversal AT et délimitant deux côtés latéraux opposés droit et gauche, à savoir un premier côté latéral (dans la suite de la description il s'agira du côté gauche) et un second côté latéral (dans la suite de la description il s'agira du côté droit). Ce plan médian PM inclut également un axe longitudinal AL de la trottinette 1, un tel axe longitudinal AL passant par la roue avant 5 et par la roue arrière 3 en étant parallèle à une direction d'avancée de la trottinette 1 lorsque celle-ci avance en ligne droite. Cet axe longitudinal AL est ainsi orthogonal à l'axe transversal AT. Le plan médian PM forme un plan de symétrie pour le marchepied 20 et les deux roues 3, 5

Le châssis 2 comprend une structure tubulaire qui peut, sans que cela soit limitatif, être en matériau métallique, et ce châssis 2 présente deux parties 21, 22, respectivement :
- une première partie 21 qui supporte la roue arrière 3 et le marchepied 20 ; et
- une seconde partie 22, prolongeant la première partie 21, et qui supporte en pivot la colonne de direction 4.

La suite de la description porte sur la motorisation de la trottinette 1.

Le moteur 6 est monté fixement, par exemple par boulonnage, sur une platine 26 solidaire du châssis 2, et plus spécifiquement une platine 26 qui est solidaire d'une extrémité arrière de la première partie 21 du châssis 2.

Cette platine 26 s'étend dans un plan vertical, orthogonalement à l'axe longitudinal AL de la trottinette 1. Cette platine 26 présente deux faces 260, 261 opposées, à savoir :
- une face avant 260 tournée vers l'avant (côté roue avant 5) et de laquelle fait saillie le moteur 6 ; et
- une face arrière 261 tournée vers l'arrière (côté roue arrière 3).

Cette platine 26 est asymétrique par rapport au plan médian PM de la trottinette 1 en présentant une portion latérale 262 qui dépasse latéralement sur le second côté latéral (pour rappel le côté droit sur les Figures) vis-à-vis du plan médian PM. Cette portion latérale 262 dépasse donc sur le second côté latéral, au-delà du châssis 2 et même au-delà du marchepied 20, tout en se situant en-dessous de ce même marchepied 20.

Aussi, le moteur 6 est fixé sur cette portion latérale 262 et ainsi ce moteur 6 s'étend sur le second côté latéral, à côté de l'extrémité arrière de la première partie 21 du châssis 2. Le moteur 6 s'étend donc à l'arrière du marchepied 20, et partiellement en-dessous du marchepied 20, en dépassant en partie latéralement à droite du marchepied 20.

Comme visible sur les Figures 1, 2, 3 et 5, le marchepied 20 présente un gradin arrière 27, en surélévation, pour une disposition du moteur 6 partiellement en-dessous de ce gradin arrière 27.

Le moteur 6 est équipé d'un arbre moteur 60 entraîné en rotation selon un axe moteur AM parallèle à l'axe longitudinal AL, où cet arbre moteur 60 traverse la platine 26 pour saillir au-delà de la face arrière 261 de la platine 26.

Concernant la transmission entre l'arbre moteur 60 et la roue arrière 3, le système de transmission 8 comprend un système à engrenage 9 formant un engrenage conique à denture hélicoïdale ou droite muni d'une couronne dentée 90 en engrènement avec un pignon denté 91.

Le pignon denté 91 est solidaire d'un arbre de pignon 92 s'étendant de manière coaxiale et dans le prolongement de l'arbre moteur 60, et cet arbre de pignon 92 est accouplé en rotation à l'arbre moteur 60 via un accouplement à élastomère 93. Ainsi, la rotation de l'arbre moteur 60 entraîne la rotation de l'arbre de pignon 92 et donc du pignon denté 91 selon l'axe moteur AM parallèle à l'axe longitudinal AL.

A la place de l'accouplement à élastomère 93, il peut être envisageable de prévoir d'autre moyens de transmission entre l'arbre de pignon 92 et l'arbre moteur 60, comme par exemple un joint homocinétique, un joint de transmission ou un joint universel, de tels joints permettant, comme l'accouplement à élastomère 93, de rattraper un éventuel désalignement entre l'arbre de pignon 92 et l'arbre moteur 60. En variante, il peut être prévu un système à engrenage préliminaire (en sus du système à engrenage précité) pour accoupler en rotation l'arbre de pignon 92 et l'arbre moteur 60.

Le système de transmission 8 comprend en outre un arbre transversal arrière 80 s'étendant selon l'axe transversal AT orthogonal à l'axe moteur AM. Cet arbre transversal arrière 80 présente deux portions d'extrémité 81, 82 opposées, à savoir :
- une première portion d'extrémité 81 accouplée en rotation à la couronne dentée 90, cette couronne dentée 90 étant ainsi portée par cette première portion d'extrémité 81 ;
- une seconde portion d'extrémité 82 accouplée en rotation à la roue arrière 3, cette roue arrière 3 étant ainsi portée par cette seconde portion d'extrémité 82.

Ainsi, une rotation de l'arbre moteur 60 selon l'axe moteur AM est convertible par ce système à engrenage 9 en une rotation de l'arbre transversal arrière 80 et de la roue arrière 3 autour de l'axe transversal AT. Par ailleurs, ce système à engrenage 9 présente un rapport de transmission entre l'arbre moteur 60 en entrée et l'arbre transversal arrière 80 en sortie qui est fixe et compris entre 1:2 et 1:5.

Le système de transmission 8 comprend en outre une structure arrière 10 fixée au châssis 2 et supportant le système à engrenage 9, l'arbre transversal arrière 80 et la roue arrière 3.

Il est à noter aussi que la roue arrière 3 présente deux faces latérales 31, 32 opposées, à savoir :
- une première face latérale 31 sur le premier côté latéral (pour rappel le côté gauche sur les Figures) vis-à-vis du plan médian PM, et
- une seconde face latérale 32 sur le second côté latéral (pour rappel le côté droit sur les Figures) vis-à-vis du plan médian PM.

Ces faces latérales 31, 32 forment les flancs à droite et à gauche de la roue arrière 31, qui bordent une bande circonférentielle de roulement 33.

Cette structure arrière 10 s'étend latéralement sur le seul second côté latéral vis-à-vis du plan médian PM, tout comme le moteur 6 et la portion latérale 262 de la platine 26 qui s'étendent aussi sur ce second côté latéral. Cette structure arrière 10 s'étend en partie en regard de la seconde face latérale 32 de la roue arrière 3.

Cette structure arrière 10 est fixée sur la platine 26, et plus spécifiquement sur la portion latérale 262, et fait saillie de sa face arrière 261. Ainsi, le moteur 6 et la structure arrière 10 s'étendent de part et d'autre de cette platine 26. Cette structure arrière 10 est par exemple fixée par boulonnage, vissage ou soudage sur la platine 26, tout comme il est envisageable que cette structure arrière 10 vienne de matière avec la platine 26.

Cette structure arrière 10 comprend deux flasques 11, 12, respectivement un flasque interne 11 et un flasque externe 12, s'étendant en vis-à-vis et écartés l'un de l'autre. Le flasque interne 11 s'étend sur l'intérieur le long de la roue arrière 3 et en regard de la second face latérale 32 de la roue arrière 3, tandis que le flasque externe 12 s'étend sur l'extérieur, à une plus grand distance de la second face latérale 32 de la roue arrière 3 comparativement au flasque interne 11.

Ces deux flasques 11, 12 s'étendent parallèlement à l'axe moteur AM et sont orthogonaux à l'axe transversal AT. Ces deux flasques 11, 12 s'étendent à partir de la face arrière 261 de la platine 26, sur laquelle ils sont fixés.

Cette structure arrière 10 comprend également un plateau 13 s'étendant entre les deux flasques 11, 12. Ce plateau 13 s'étend orthogonalement à l'axe moteur AM et se situe à distance de la platine 26. Ainsi, cette structure arrière 10 présente une structure en « H » avec les deux flasques 11, 12 parallèles et le plateau 13 joignant les deux flasques 11, 12 entre eux. Ce plateau 13 est fixé sur les deux flasques 11, 12 par exemple par vissage, boulonnage ou soudage, tout comme il est envisageable que ce plateau 13 vienne de matière avec les deux flasques 11, 12.

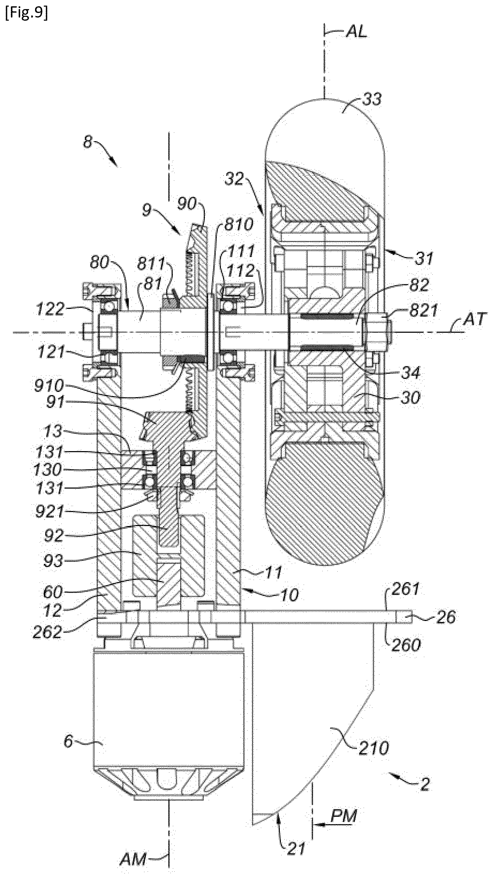

Ce plateau 13 est muni d'un orifice, appelé orifice avant 130, traversé par l'arbre de pignon 92 solidaire du pignon denté 91. Cet orifice avant 130 supporte au moins un palier de roulement 131, et notamment deux paliers de roulement 131 comme visible sur la figure 9, dans lesquels est monté rotatif l'arbre de pignon 92. Ainsi, l'arbre de pignon 92 est porté par ce plateau 13 et est guidé en rotation dans son orifice avant 130. Ce ou chaque palier de roulement 131 peut par exemple être un roulement à billes ou à aiguilles.

L'arbre de pignon 92 est en liaison pivot avec le plateau 13, et pour ce faire l'arbre de pignon 92 est bloqué en translation selon l'axe moteur AM, au moyen de :
- un épaulement prévu sur l'arbre de pignon 92 du côté du pignon denté 91, un tel épaulement venant en butée contre une face avant du plateau 13 ; et
- un écrou 921 vissé sur une section filetée de l'arbre de pignon 92 et venant en butée contre une face arrière du plateau 13.

L'accouplement à élastomère 93 est situé entre le plateau 13 et la platine 26, et s'étend entre les deux flasques 11, 12.

Les deux flasques 11, 12 présentent des orifices respectifs, appelés orifices arrière, qui sont ménagés en vis-à-vis et qui sont tous deux traversés par la première portion d'extrémité 81 de l'arbre transversal arrière 80. Ces deux orifices arrière supportent des paliers de roulement 111, 121 respectifs dans lesquels est montée rotative la première portion d'extrémité 81 de l'arbre transversal arrière 80. Ainsi, l'arbre transversal arrière 80 est porté par ces deux flasques 11, 12 et est guidé en rotation dans leurs orifices arrière. Les paliers de roulement 111, 121 peuvent par exemple être des roulements à billes ou à aiguilles.

Les deux flasques 11, 12 encadrent le pignon denté 91 et la couronne dentée 90, et la première portion d'extrémité 81 de l'arbre transversal arrière 80 s'étend principalement entre les deux flasques 11, 12 de la structure arrière 10, tandis que la seconde portion d'extrémité 82 de l'arbre transversal arrière 80 dépasse de la structure arrière 10, et plus spécifiquement dépasse du flasque interne 11 pour supporter en porte-à-faux la roue arrière 3.

La couronne dentée 90 est solidaire en rotation de l'arbre transversal arrière 80 au moyen d'une clavette 910 accouplant la couronne dentée 90 à la première portion d'extrémité 81 de l'arbre transversal arrière 80. La couronne dentée 90 est bloquée en translation selon l'axe transversal AT, au moyen de :
- un épaulement 810 prévu sur la première portion d'extrémité 81 du côté du flasque interne 11, la couronne dentée 90 offrant une face interne venant en appui contre un tel épaulement 810 ; et
- un écrou 811 vissé sur une section filetée de la première portion d'extrémité 81 et venant en butée contre une face externe de la couronne dentée 90.

L'arbre transversal arrière 80 est en liaison pivot avec les flasques 11, 12, et pour ce faire l'arbre transversal arrière 80 est bloqué en translation selon l'axe transversal AT, au moyen de :
- un épaulement externe prévu sur la première portion d'extrémité 81 et sur lequel vient buter le palier de roulement 121 monté dans le flasque externe 12, et un anneau de blocage 122 fixé sur le flasque externe 12 et bloquant ce même palier de roulement 121 ; et
- un épaulement interne prévu sur la première portion d'extrémité 81 et sur lequel vient buter le palier de roulement 111 monté dans le flasque interne 11, et un anneau de blocage 112 fixé sur le flasque interne 11 et bloquant ce même palier de roulement 111.

La roue arrière 3 s'étend à une distance fixe vis-à-vis du flasque interne 11 de la structure arrière 10, et cette roue arrière 3 est portée en porte-à-faux par la seconde portion d'extrémité 82 de l'arbre transversal arrière 80. Il est à noter que la seconde face latérale 32 de la roue arrière 3 est couverte par la structure arrière 10 et par le système à engrenage 9, tandis que la première face latérale 31 de la roue arrière 3 est complètement dégagée et libre d'accès, grâce à ce montage en porte-à-faux.

La roue arrière 3 présente un moyeu 30 qui est traversé par la seconde portion d'extrémité 82 et qui est solidaire en rotation de cette seconde portion d'extrémité 82 de l'arbre transversal arrière 80 au moyen d'au moins une clavette 34 accouplant le moyeu 30 à la seconde portion d'extrémité 82 de l'arbre transversal arrière 80.

A la place de l'accouplement à clavette entre l'arbre transversal arrière 80 et le moyeu 30 de la roue arrière 3, il peut être envisageable de prévoir d'autres moyens d'accouplement en rotation, comme par exemple un accouplement à bride, un accouplement à goupille, un accouplement à étrier, un accouplement à bague, ...

Le moyeu 30 est en liaison pivot avec la seconde portion d'extrémité 82 de l'arbre transversal arrière 80, et pour ce faire la seconde portion d'extrémité 82 est bloqué en translation selon l'axe transversal AT, au moyen de :
- un épaulement prévu sur la seconde portion d'extrémité 82 et sur lequel vient buter le moyeu 30 ; et
- un écrou 821 vissé sur une extrémité interne de l'arbre transversal arrière 80 et venant en butée contre le moyeu 30.

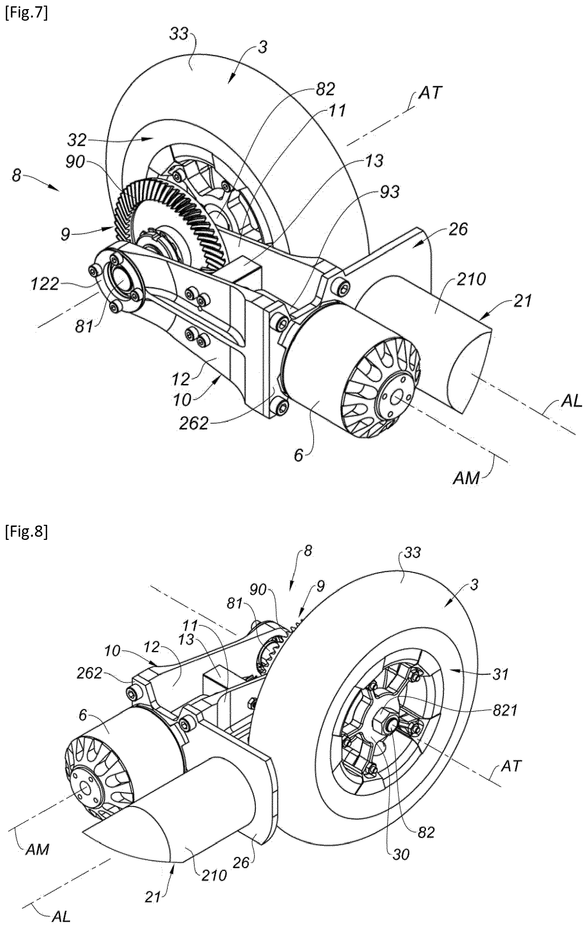

Il est envisageable de prévoir un carter 94, visible sur les figures 1, 2, 5 et 6 et non illustré sur les figures 7 à 9, où ce carter 94 est fixé sur la structure arrière 10 et comprend :
- une partie arrière de forme circulaire qui enveloppe la couronne dentée 90 sur toute sa circonférence, et
- une partie avant qui prolonge la partie arrière et qui enveloppe le pignon denté 91 jusqu'au plateau 13.

La suite de la description porte sur le pliage de la trottinette 1.

En effet, dans l'exemple illustré sur les Figures, la première partie 21 et la seconde partie 22 du châssis sont reliées l'une à l'autre par une articulation pivotante 7 selon un axe de pliage AP qui autorise un pliage et un dépliage de la trottinette 1 selon cet axe de pliage AP, cette trottinette 1 formant alors une trottinette pliable. Dans une variante non illustrée, la trottinette 1 n'est pas pliable, autrement dit cette articulation pivotante 7 est absente.

Ainsi, le pivotement de la seconde partie 22 vis-à-vis de la première partie 21 se traduit par un basculement (ou un pivotement) de la colonne de direction 4 pour un pliage/dépliage de la trottinette 1.

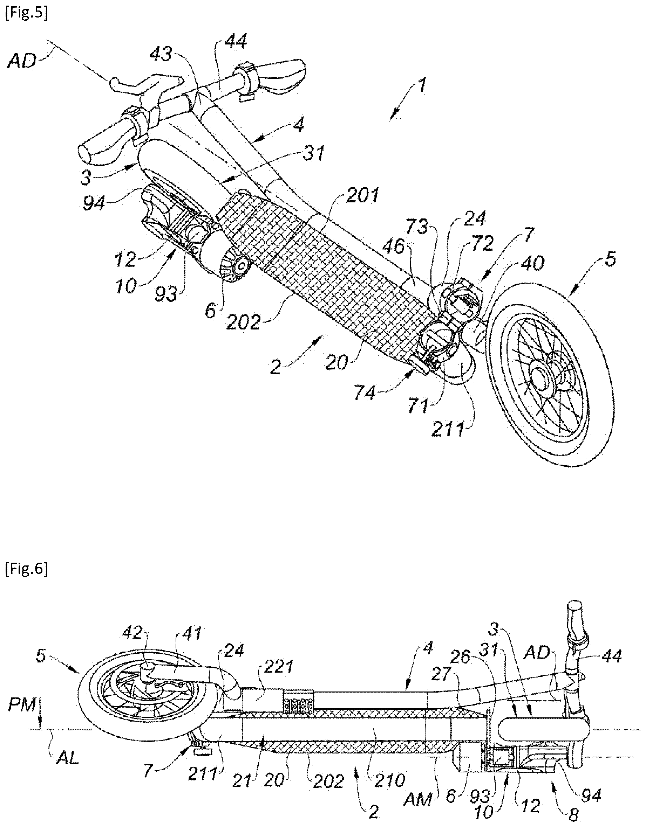

L'articulation pivotante 7 permet donc une mobilité relative entre les deux parties 21, 22 du châssis 2 entre :
- une configuration dépliée, visible sur les figures 1 à 4, dans laquelle la colonne de direction 4 saille vers le haut vis-à-vis du marchepied 20 pour un usage lors d'un déplacement, la colonne de direction 4 s'étendant alors dans le plan médian PM ; et
- une configuration repliée, visible sur les figures 5 et 6, dans laquelle la colonne de direction 4 est rabattue sur le côté gauche, le long du marchepied 20.

La première partie 21 présente deux sections tubulaires successives :
- une section centrale 210 sur laquelle est fixée le marchepied 20 ; et
- une section coudée 211 qui prolonge la section centrale 210 et qui forme un coude tournée vers le haut, avec un angle de coude IC (visible en Figure 2) compris entre 90 et 120 degrés, et notamment entre 100 et 110 degrés.

La section centrale 210 s'étend selon l'axe longitudinal AL de la trottinette 1. Par ailleurs, la section coudée 211 présente une extrémité supérieure (qui forme l'extrémité supérieure de la première partie 21) sur laquelle est montée l'articulation pivotante 7.

Cette extrémité supérieure s'étend linéairement selon un axe secondaire AS qui est incliné par rapport à l'axe longitudinal AL d'un angle secondaire IS (visible en Figure 2), avec la relation suivante : IS = 180 - IC. Ainsi, cet angle secondaire IS est compris entre 60 et 90 degrés, et notamment entre 70 et 80 degrés.

La seconde partie 22 présente quant à elle :
- une section avant 220, tubulaire et de forme incurvée, qui prolonge la section coudée 211 de la première partie 21 ; et
- un tube de direction 221, solidaire d'une extrémité supérieure de la section avant 220, et à l'intérieur duquel est montée pivotante la colonne de direction 4.

En configuration dépliée, le tube de direction 221 s'étend selon un axe de direction AD qui est vertical ou incliné vers l'arrière par rapport à la verticale d'un angle de direction ID (visible en Figure 2) compris entre 0 et 20 degrés, et ainsi la colonne de direction 4 pivote autour de cet axe de direction AD. La colonne de direction 4 est ainsi en liaison pivot dans le tube de direction 221.

La colonne de direction 4 présente une extrémité inférieure 40, en-dessous du tube de direction 221, qui est solidaire d'un bras 41 (ou en variante d'une fourche) ; un tel bras 41 (ou en variante une telle fourche) portant un arbre transversal avant 42 sur lequel est montée pivotante la roue avant 5.

La colonne de direction 4 présente une extrémité supérieure 43 solidaire d'un guidon 44 muni de deux poignées 45.

Il peut également être prévu sur la colonne de direction 4 un système télescopique 46, au-dessus du tube de direction 221, autorisant un réglage en hauteur de colonne de direction 4, et plus spécifiquement du guidon 44.

Il est à noter que la section avant 220 de la seconde partie 22 du châssis 2 présente une extrémité inférieure (qui forme l'extrémité inférieure de la seconde partie 22 et qui est opposée au tube de direction 221) sur laquelle est montée l'articulation pivotante 7. Cette extrémité inférieure s'étend linéairement selon l'axe secondaire AS dans la configuration dépliée. Autrement dit, dans la configuration dépliée, l'extrémité supérieure de la première partie 21 du châssis 2 et l'extrémité inférieure de la seconde partie 22 du châssis 2 sont en alignement le long de cet axe secondaire AS.

De manière plus précise, la trottinette 1 est configurable entre :
- la configuration dépliée dans laquelle le tube de direction 221 et la colonne de direction 4 s'étendent selon l'axe de direction AD qui est sensiblement vertical, ou du moins qui est vertical ou incliné par rapport à la verticale d'un angle compris entre 0 et 20 degrés ;
- la configuration repliée dans laquelle le tube de direction 221 et la colonne de direction 4 s'étendent selon l'axe de direction AD qui a basculé pour être sensiblement horizontal, ou du moins qui est horizontal ou incliné par rapport à l'horizontale d'un angle compris entre 0 et 20 degrés.

Avantageusement, dans la configuration repliée, l'axe de direction AD est parallèle (à plus ou moins cinq degrés) à l'axe longitudinal AL, de sorte que la colonne de direction 4 s'étend parallèlement à cet axe longitudinal AL.

Bien que non illustré, il est avantageux de prévoir un moyen de blocage de la trottinette 1 dans la configuration repliée, afin d'éviter qu'elle ne se déplie par inadvertance notamment quand on la transporte manuellement ou quand on la pose sur le sol.

Concernant l'articulation pivotante 7, celle-ci se présente sous la forme d'une charnière pourvue d'un premier charnon 71 solidaire de l'extrémité supérieure de la première partie 21 et d'un second charnon 72 solidaire de l'extrémité inférieure de la seconde partie 22, où le premier charnon 71 et le second charnon 72 sont articulés l'un par rapport à l'autre au moyen d'un pivot 73 (c'est-à-dire un axe physique) définissant l'axe de pliage AP.

Ainsi, cette articulation pivotante 7 est mobile en pivotement entre :
- une position fermée correspondant à la configuration dépliée de la trottinette 1, dans laquelle l'extrémité supérieure de la première partie 21 et l'extrémité inférieure de la seconde partie 22 sont en alignement le long de l'axe secondaire AS ; et
- une position ouverte correspondant à la configuration repliée de la trottinette 1, dans laquelle l'extrémité supérieure de la première partie 21 et l'extrémité inférieure de la seconde partie 22 sont désalignées et sont écartés l'un de l'autre suite au pivotement autour de l'axe de pliage AP.

Il est à noter que le premier charnon 71 comprend une première bride de serrage enserrant l'extrémité supérieure de la première partie 21, et le second charnon 72 comprend une seconde bride de serrage enserrant l'extrémité inférieure de la seconde partie 22. Ces brides de serrage peuvent être formées de colliers de serrage fendus et équipés d'une ou plusieurs vis de serrage qui permettent de serrer les colliers autour de telles extrémités tubulaires.

Comme visible sur les Figures 5 et 6, l'articulation pivotante 7 est agencée pour une mobilité de la colonne de direction 4 de la configuration dépliée vers la configuration repliée dans laquelle la colonne de direction 4 est rabattue sur le premier côté latéral (pour rappel le côté gauche sur les Figures) vis-à-vis du plan médian PM et s'étend à distance de ce plan médian PM (autrement dit hors du plan médian PM), au moins partiellement en-dessous du marchepied 20, le long d'un premier rebord latéral 201 du marchepied 20 situé sur le premier côté latéral et en regard de la première face latérale 31 de la roue arrière 3 ; ledit marchepied 20 présentant un second rebord latéral 202 situé sur le second côté latéral, et donc opposé au premier rebord latéral 201 vis-à-vis du plan médian PM, ce second rebord latéral 202 étant dégagé et libre dans la configuration repliée.

A cette fin, l'axe de pliage AP est décalé sur le premier côté latéral vis-à-vis du plan médian PM, et il s'étend, d'une part, parallèlement au plan médian PM et, d'autre part, de manière inclinée par rapport à l'axe longitudinal AL selon un angle d'inclinaison IP (visible sur la Figure 2), compris entre 20 et 60 degrés, et notamment compris entre 30 et 50 degrés.

Ainsi, cette articulation pivotante 7 permet de plier la trottinette 1, en passant de la configuration dépliée à la configuration repliée, en un seul mouvement, à savoir un mouvement de rotation de la colonne de direction 4 selon l'axe de pliage AP défini par l'articulation pivotante 7.

Il est également prévu que l'articulation pivotante 7 intègre un mécanisme de verrouillage 74 propre à verrouiller l'articulation pivotante 7 en position fermée, où ce mécanisme de verrouillage 74 est manipulable manuellement pour pouvoir ouvrir et fermer l'articulation pivotante 7 lors des opérations de pliage et de dépliage.

## Revendications

1. Trottinette (1) comprenant un châssis (2) muni d'un marchepied (20) et supportant une roue arrière (3), une colonne de direction (4) équipée d'une roue avant (5) et montée pivotante sur ledit châssis (2), et un moteur (6) équipé d'un arbre moteur (60) entraîné en rotation selon un axe moteur (AM) et accouplé à la roue arrière (3) pour l'entraîner en rotation selon un axe transversal (AT) par l'intermédiaire d'un système de transmission (8), ladite trottinette (1) présentant un plan médian (PM) orthogonal à l'axe transversal (AT) et délimitant un premier côté latéral et un second côté latéral opposés, et la roue arrière (3) présentant une première face latérale (31) sur ledit premier côté latéral et une seconde face latérale (32), opposée à la première face latérale (31), sur ledit second côté latéral, dans laquelle le système de transmission (8) comprend :
- un arbre transversal arrière (80) s'étendant selon l'axe transversal (AT), non parallèle à l'axe moteur (AM), et présentant deux portions d'extrémité (81, 82) opposées, respectivement une première portion d'extrémité (81) et une seconde portion d'extrémité (82), la roue arrière (3) étant accouplée en rotation sur la seconde portion d'extrémité (82) de l'arbre transversal arrière (80) ;
- un système à engrenage (9) comprenant une couronne dentée (90) en engrènement avec un pignon denté (91), ladite couronne dentée (90) étant accouplée en rotation sur la première portion d'extrémité (81) de l'arbre transversal arrière (80), et ledit pignon denté (91) étant accouplé en rotation à l'arbre moteur (60), de sorte qu'une rotation de l'arbre moteur (60) est convertible par ledit système à engrenage (9) en une rotation de l'arbre transversal arrière (80) et de la roue arrière (3) autour de l'axe transversal (AT) ; et
- une structure arrière (10) supportant au moins la première portion d'extrémité (81) de l'arbre transversal arrière (80), ladite structure arrière (10) s'étendant latéralement sur le second côté latéral vis-à-vis du plan médian (PM), en regard de la second face latérale (32) de la roue arrière (3), de sorte que la seconde portion d'extrémité (82) de l'arbre transversal arrière (80) dépasse de la structure arrière (10) ; dans laquelle la structure arrière (10) comprend deux flasques (11, 12), respectivement un flasque interne (11) et un flasque externe (12), s'étendant en vis-à-vis et écartés l'un de l'autre, le flasque interne (11) s'étendant au moins en partie en regard de la seconde face latérale (32) de la roue arrière (3), lesdits flasques (11, 12) encadrant le pignon denté (91) et la couronne dentée (90), et dans laquelle la première portion d'extrémité (81) de l'arbre transversal arrière (80) traverse des orifices arrière ménagés en vis-à-vis dans les flasques (11, 12) respectifs ;
ladite trottinette (1) étant **caractérisée en ce que** la structure arrière (10) supporte le pignon denté (91) et est fixée au châssis (2), et **en ce que** la seconde portion d'extrémité (82) de l'arbre transversal arrière (80), qui dépasse de la structure arrière (10), supporte en porte-à-faux la roue arrière (3).

2. Trottinette (1) selon la revendication 1, dans laquelle les orifices arrière des flasques (11, 12) supportent des paliers de roulement (111, 121) dans lesquels est montée rotative la première portion d'extrémité (81) de l'arbre transversal arrière (80).

3. Trottinette (1) selon l'une quelconque des revendications précédentes, dans laquelle la structure arrière (10) comprend un plateau (13) muni d'un orifice avant (130) traversé par un arbre de pignon (92) solidaire du pignon denté (91).

4. Trottinette (1) selon la revendication 3, dans laquelle l'orifice avant (130) du plateau (13) supporte au moins un palier de roulement (131) dans lequel est monté rotatif l'arbre de pignon (92).

5. Trottinette (1) selon l'une quelconque des revendications 3 et 4, dans laquelle le plateau (13) s'étend entre les deux flasques (11, 12).

6. Trottinette (1) selon l'une quelconque des revendications précédentes, dans laquelle le pignon denté (91) est accouplé à l'arbre moteur (60) via un accouplement à élastomère (93), un joint homocinétique, un joint de transmission, ou un joint universel, ou en variante via un système à engrenage préliminaire.

7. Trottinette (1) selon l'une quelconque des revendications précédentes, dans laquelle l'axe moteur (AM) est orthogonal à l'axe transversal (AT) ou est incliné relativement à l'axe transversal (AT) selon un angle compris entre 45 et 90 degrés.

8. Trottinette (1) selon l'une quelconque des revendications précédentes, dans laquelle l'axe moteur (AM) est parallèle à un axe longitudinal (AL) de la trottinette (1), un tel axe longitudinal (AL) étant inclus dans le plan médian (PM) et passant par la roue avant (5) et par la roue arrière (3) en étant parallèle à une direction d'avancée de la trottinette (1) lorsque celle-ci avance en ligne droite, ou est incliné relativement à l'axe longitudinal (AL) selon un angle compris entre 0 et 45 degrés.

9. Trottinette (1) selon l'une quelconque des revendications précédentes, dans laquelle la roue arrière (3) est pourvue d'un moyeu (30) qui est accouplé en rotation sur la seconde portion d'extrémité (82) de l'arbre transversal arrière (80), par exemple au moyen d'au moins une clavette (34), d'un accouplement à bride, d'un accouplement à goupille, d'un accouplement à étrier ou d'un accouplement à bague.

10. Trottinette (1) selon l'une quelconque des revendications précédentes, dans laquelle le système à engrenage (9) forme un engrenage conique à denture hélicoïdale ou droite.

11. Trottinette (1) selon l'une quelconque des revendications précédentes, dans laquelle le système à engrenage (9) présente un rapport de transmission entre l'arbre moteur (60) en entrée et l'arbre transversal arrière (80) en sortie qui est compris entre 1:2 et 1:5.

12. Trottinette (1) selon l'une quelconque des revendications précédentes, dans laquelle la structure arrière (10) est fixée sur une platine (26) solidaire du châssis (2), ladite platine (26) supportant le moteur (6) et présentant deux faces (260, 261) opposées, respectivement une face avant (260) de laquelle fait saillie le moteur (6) et une face arrière (261) de laquelle fait saillie la structure arrière (10).

13. Trottinette (1) selon l'une quelconque des revendications précédentes, dans laquelle le moteur (6) s'étend à l'arrière du marchepied (20) et partiellement en-dessous du marchepied (20).

14. Trottinette (1) selon la revendication 13, dans laquelle le marchepied (20) présente un gradin arrière (27), en surélévation, pour une disposition du moteur (6) partiellement en-dessous de ce gradin arrière (27).

15. Trottinette (1) selon l'une quelconque des revendications précédentes, dans laquelle la trottinette (1) est pliable avec son châssis (2) comprenant, d'une part, une première partie (21) supportant la roue arrière (3) et le marchepied (20) et, d'autre part, une seconde partie (22) supportant en pivot la colonne de direction (4), dans laquelle la première partie (21) et la second partie (22) du châssis (2) sont reliées l'une à l'autre par une articulation pivotante (7) selon un axe de pliage (AP) permettant une mobilité de l'une par rapport à l'autre entre :
- une configuration dépliée dans laquelle la colonne de direction (4) saille vers le haut vis-à-vis du marchepied (20) pour un usage lors d'un déplacement, ladite colonne de direction (4) s'étendant dans le plan médian (PM) ; et
- une configuration repliée dans laquelle la colonne de direction (4) est rabattue sur le premier côté latéral vis-à-vis du plan médian (PM) et s'étend à distance dudit plan médian (PM), au moins partiellement en-dessous du marchepied (20), le long d'un premier rebord latéral (201) du marchepied (20) situé sur ledit premier côté latéral et en regard de la première face latérale (31) de la roue arrière (3).

## Patentansprüche

1. Roller (1), umfassend einen Rahmen (2), der mit einem Trittbrett (20) versehen ist, und ein Hinterrad (3) trägt, eine Lenksäule (4), die mit einem Vorderrad (5) ausgestattet ist, und schwenkbar am Rahmen (2) angebracht ist, und einen Motor (6), der mit einer Motorwelle (60) ausgestattet ist, die entlang einer Motorachse (AM) in Drehung angetrieben wird, und an dem Hinterrad (3) angekoppelt ist, um es entlang einer Querachse (AT) anhand eines Getriebesystems (8) in Drehung anzutreiben, wobei der Roller (1) eine Mittelebene (PM) orthogonal zur Querachse (AT) aufweist, und eine erste laterale Seite und eine zweite laterale Seite einander gegenüber begrenzt, und das Hinterrad (3) eine erste laterale Fläche (31) auf der ersten lateralen Seite und eine zweite laterale Fläche (32) gegenüber der ersten lateralen Fläche (31) auf der zweiten lateralen Seite aufweist, wobei das Getriebesystem (8) umfasst:
- eine hintere querlaufende Welle (80), die sich entlang der Querachse (AT), nicht parallel zur Motorachse (AM) erstreckt und zwei gegenüberliegende Endabschnitte (81, 82), jeweils einen ersten Endabschnitt (81) und einen zweiten Endabschnitt (82) aufweist, wobei das Hinterrad (3) drehend an den zweiten Endabschnitt (82) der hinteren querlaufenden Welle (80) angekoppelt ist;
- ein Zahnradsystem (9), umfassend einen Zahnkranz (90) in Eingriff mit einem Zahnritzel (91), wobei der Zahnkranz (90) drehend am ersten Endabschnitt (81) der hinteren querlaufenden Welle (80) angekoppelt ist, und das Zahnritzel (91) drehend an die Motorwelle (60) angekoppelt ist, sodass eine Drehung der Motorwelle (60) durch das Zahnradsystem (9) in eine Drehung der hinteren querlaufenden Welle (80) und des Hinterrades (3) um die Querachse (AT) herum konvertierbar ist; und
- eine hintere Struktur (10), welche mindestens den ersten Endabschnitt (81) der hinteren querlaufenden Welle (80) trägt, wobei sich die hintere Struktur (10) lateral auf der zweiten lateralen Seite gegenüber der Mittelebene (PM) gegenüber der zweiten lateralen Fläche (32) des Hinterrades (3) erstreckt, sodass der zweite Endabschnitt (82) der hinteren querlaufenden Welle (80) aus der hinteren Struktur (10) herausragt; wobei die hintere Struktur (10) zwei Flansche (11, 12), jeweils einen inneren Flansch (11) und einen äußeren Flansch (12) umfasst, die sich einander gegenüber erstrecken und voneinander beabstandet sind, wobei sich der innere Flansch (11) mindestens teilweise gegenüber der zweiten lateralen Fläche (32) des Hinterrades (3) erstreckt, wobei die Flansche (11, 12) das Zahnritzel (91) und den Zahnkranz (90) flankieren, und wobei der erste Endabschnitt (81) der hinteren querlaufenden Welle (80) hintere Öffnungen durchquert, die einander gegenüber in die jeweiligen Flansche (11, 12) eingearbeitet sind;
wobei der Roller (1) **dadurch gekennzeichnet ist, dass** die hintere Struktur (10) das Zahnritzel (91) trägt, und am Rahmen (2) befestigt ist, und dadurch, dass der zweite Endabschnitt (82) der hinteren querlaufenden Welle (80), der aus der hinteren Struktur (10) herausragt, das Hinterrad (3) freitragend trägt.

2. Roller (1) nach Anspruch 1, wobei die hinteren Öffnungen der Flansche (11, 12) Wälzlager (111, 121) tagen, in denen der erste Endabschnitt (81) der hinteren querlaufenden Welle (80) drehbar montiert ist.

3. Roller (1) nach einem der vorstehenden Ansprüche, wobei die hintere Struktur (10) eine Platte (13) umfasst, die mit einer vorderen Öffnung (130) versehen ist, die von einer Ritzelwelle (92) durchquert wird, die fest mit dem Zahnritzel (91) verbunden ist.

4. Roller (1) nach Anspruch 3, wobei die vordere Öffnung (130) der Platte (13) mindestens ein Wälzlager (131) trägt, in dem die Ritzelwelle (92) drehend montiert ist.

5. Roller (1) nach einem der Ansprüche 3 und 4, wobei sich die Platte (13) zwischen den beiden Flanschen (11, 12) erstreckt.

6. Roller (1) nach einem der vorstehenden Ansprüche, wobei das Zahnritzel (91) anhand einer Elastomer-Kupplung (93), eines Gleichlaufgelenks, eines Getriebegelenks, oder eines Kreuzgelenks oder als Variante über ein Vorgetriebesystem an die Motorwelle (60) angekoppelt ist.

7. Roller (1) nach einem der vorstehenden Ansprüche, wobei die Motorachse (AM) orthogonal zur Querachse (AT) ist, oder in Bezug auf die Querachse (AT) entsprechend einem Winkel schräggestellt ist, der zwischen 45 und 90 Grad liegt.

8. Roller (1) nach einem der vorstehenden Ansprüche, wobei die Motorachse (AM) parallel zu einer Längsachse (AL) des Rollers (1) verläuft, wobei eine solche Längsachse (AL) in der Mittelebene (PM) eingeschlossen ist, und durch das Vorderrad (5) und durch das Hinterrad (3) verläuft, und dabei parallel zu einer Fortbewegungsrichtung des Rollers (1) ist, wenn sich selbiger gerade fortbewegt, oder in Bezug auf die Längsachse (AL) entsprechend einem Winkel schräggestellt ist, der zwischen 0 und 45 Grad liegt.

9. Roller (1) nach einem der vorstehenden Ansprüche, wobei das Hinterrad (3) mit einer Nabe (30) versehen ist, die drehend, beispielsweise anhand mindestens einer Passfeder (34), einer Flanschkupplung, einer Stiftkupplung, einer Bügelkupplung oder einer Ringkupplung, am zweiten Endabschnitt (82) der hinteren querlaufenden Welle (80) angekoppelt ist.

10. Roller (1) nach einem der vorstehenden Ansprüche, wobei das Getriebesystem (9) ein spiral- oder geradverzahntes Kegelradgetriebe bildet.

11. Roller (1) nach einem der vorstehenden Ansprüche, wobei das Getriebesystem (9) ein Übersetzungsverhältnis zwischen dem Motor (60) am Eingang, und der hinteren querlaufenden Welle (80) am Ausgang aufweist, das zwischen 1:2 und 1:5 liegt.

12. Roller (1) nach einem der vorstehenden Ansprüche, wobei die hintere Struktur (10) an einer Platte (26) befestigt ist, die fest mit dem Rahmen (2) verbunden ist, wobei die Platte (26) den Motor (6) trägt, und zwei gegenüberliegende Flächen (260, 261), jeweils eine vordere Fläche (260), aus der der Motor (6) hervorsteht, und eine hintere Fläche (261), aus der die hintere Struktur (10) hervorsteht, aufweist.

13. Roller (1) nach einem der vorstehenden Ansprüche, wobei sich der Motor (6) hinter dem Trittbrett (20) und teilweise unter dem Trittbrett (20) erstreckt.

14. Roller (1) nach Anspruch 13, wobei das Trittbrett (20) eine hintere, in der Höhe versetzte Stufe (27) für eine Anordnung des Motors (6) teilweise unter dieser hinteren Stufe (27) aufweist.

15. Roller (1) nach einem der vorstehenden Ansprüche, wobei der Roller (1) mit seinem Rahmen (2) klappbar ist, der einerseits einen ersten Teil (21) umfasst, der das Hinterrad (3) und das Trittbrett (20) trägt, und andererseits einen zweiten Teil (22), der die Lenksäule (4) schwenkbar trägt, wobei der erste Teil (21) und der zweite Teil (22) des Rahmens (2) durch ein schwenkbares Gelenk (7) entlang einer Klappachse (AP) miteinander verbunden sind, der eine Beweglichkeit zueinander ermöglicht, zwischen:
- einer aufgeklappten Konfiguration, in der die Lenksäule (4) für eine Nutzung bei einer Fortbewegung nach oben gegenüber dem Trittbrett (20) hervorsteht, wobei sich die Lenksäule (4) in der Mittelebene (PM) erstreckt; und
- einer eingeklappten Konfiguration, in der die Lenksäule (4) auf der ersten lateralen Seite gegenüber der Mittelebene (PM) umgeklappt ist, und sich auf Abstand zur Mittelebene (PM), mindestens teilweise unter dem Trittbrett (20) entlang eines ersten lateralen Randes (201) des Trittbretts (20) erstreckt, der sich auf der ersten lateralen Seite und gegenüber der ersten lateralen Fläche (31) des Hinterrades (3) befindet.

## Claims

1. A scooter (1) comprising a frame (2) provided with a footboard (20) and supporting a rear wheel (3), a steering column (4) equipped with a front wheel (5) and pivotally mounted on said frame (2), and a motor (6) equipped with a motor shaft (60) driven in rotation about a motor axis (AM) and coupled to the rear wheel (3) to drive it in rotation according to a transverse axis (AT) via a transmission system (8), said scooter (1) having a midplane (PM) orthogonal to the transverse axis (AT) and delimiting opposite first and second lateral sides, and the rear wheel (3) having a first lateral face (31) on said first lateral side and a second lateral face (32), opposite to the first lateral face (31), on said second lateral side, wherein the transmission system (8) comprises:
- a rear transverse shaft (80) extending along the transverse axis (AT), not parallel to the motor axis (AM), and having two opposite end portions (81, 82), respectively a first end portion (81) and a second end portion (82), the rear wheel (3) being coupled in rotation to the second end portion (82) of the rear transverse shaft (80);
- a gear system (9) comprising a gear ring (90) meshing with a gear pinion (91), said gear ring (90) being coupled in rotation to the first end portion (81) of the rear transverse shaft (80), and said gear pinion (91) being coupled in rotation to the motor shaft (60), such that a rotation of the motor shaft (60) is convertible by said gear system (9) into a rotation of the rear transverse shaft (80) and the rear wheel (3) about the transverse axis (AT); and
- a rear structure (10) supporting at least the first end portion (81) of the rear transverse shaft (80), said rear structure (10) extending laterally on the second lateral side with respect to the midplane (PM), facing the second lateral face (32) of the rear wheel (3), such that the second end portion (82) of the rear transverse shaft (80) protrudes from the rear structure (10);
wherein the rear structure (10) comprises two flanges (11, 12), respectively an inner flange (11) and an outer flange (12), extending facing each other and spaced apart from each other, the inner flange (11) extending at least partly opposite the second lateral face (32) of the rear wheel (3), said flanges (11, 12) surrounding the gear pinion (91) and the gear ring (90), and wherein the first end portion (81) of the rear transverse shaft (80) passes through rear orifices formed facing each other in the respective flanges (11, 12);
said scooter (1) being **characterized in that** the rear structure (10) supports the gear pinion (91) and is fastened to the frame (2), and **in that** the second end portion (82) of the rear transverse shaft (80), which protrudes from the rear structure (10), supports the rear wheel (3) in a cantilever fashion.

2. The scooter (1) according to claim 1, wherein the rear orifices of the flanges (11, 12) support rolling bearings (111, 121) in which is rotatably mounted the first end portion (81) of the rear transverse shaft (80).

3. The scooter (1) according to any one of the preceding claims, wherein the rear structure (10) comprises a plate (13) provided with a front orifice (130) through which passes a pinion shaft (92) secured to the gear pinion (91).

4. The scooter (1) according to claim 3, wherein the front orifice (130) of the plate (13) supports at least one rolling bearing (131) in which the pinion shaft (92) is rotatably mounted.

5. The scooter (1) according to any one of claims 3 and 4, wherein the plate (13) extends between the two flanges (11, 12).

6. The scooter (1) according to any one of the preceding claims, wherein the gear pinion (91) is coupled to the motor shaft (60) via an elastomeric coupling (93), a constant velocity joint, a transmission joint, or a universal joint, or alternatively via a preliminary gear system.

7. The scooter (1) according to any one of the preceding claims, wherein the motor axis (AM) is orthogonal to the transverse axis (AT) or is inclined with respect to the transverse axis (AT) by an angle comprised between 45 and 90 degrees.

8. The scooter (1) according to any one of the preceding claims, wherein the motor axis (AM) is parallel to a longitudinal axis (AL) of the scooter (1), such a longitudinal axis (AL) being included in the midplane (PM) and passing through the front wheel (5) and through the rear wheel (3) while being parallel to an advance direction of the scooter (1) when the latter moves forward in a straight line, or is inclined with respect to the longitudinal axis (AL) by an angle between 0 and 45 degrees.

9. The scooter (1) according to any one of preceding claims, wherein the rear wheel (3) is provided with a hub (30) which is coupled in rotation to the second end portion (82) of the rear transverse shaft (80), for example by means of at least one key (34), a flanged coupling, a pin coupling, a yoke coupling or a ring coupling.

10. The scooter (1) according to any one of the preceding claims, wherein the gear system (9) forms a bevel gear with helical or spur toothing.

11. The scooter (1) according to any one of the preceding claims, wherein the gear system (9) has a transmission ratio between the motor shaft (60) at the input and the rear transverse shaft (80) at the output which is comprised between 1:2 and 1:5.

12. The scooter (1) according to any one of the preceding claims, wherein the rear structure (10) is fastened to a connecting plate (26) secured to the frame (2), said connecting plate (26) supporting the motor (6) and having two opposite faces (260, 261), respectively a front face (260) from which protrudes the motor (6) and a rear face (261) from which protrudes the rear structure (10).

13. The scooter (1) according to any one of the preceding claims, wherein the motor (6) extends behind the footboard (20) and partially below the footboard (20).

14. The scooter (1) according to claim 13, wherein the footboard (20) has a rear step (27), above grade, for an arrangement of the motor (6) partially below this rear step (27).

15. The scooter (1) according to any one of the preceding claims, wherein the scooter (1) is foldable with its frame (2) comprising, on the one hand, a first portion (21) supporting the rear wheel (3) and the footboard (20) and, on the other hand, a second portion (22) pivotally supporting the steering column (4), wherein the first portion (21) and the second portion (22) of the frame (2) are connected to each other by a swivel joint (7) along a folding axis (AP) allowing mobility of one relative to the other between:
- an unfolded configuration in which the steering column (4) projects upwardly with respect to the footboard (20) for use when moving, said steering column (4) extending in the midplane (PM); and
- a folded configuration in which the steering column (4) is folded down onto the first lateral side with respect to the midplane (PM) and extends at a distance from said midplane (PM), at least partially below of the footboard (20), along a first lateral rim (201) of the footboard (20) located on said first lateral side and facing the first lateral face (31) of the rear wheel (3).
